# EUROPÄISCHE PATENTSCHRIFT

(11) **EP 0 723 982 B1**
(45) Veröffentlichungstag und Bekanntmachung des Hinweises auf die Patenterteilung: **16.06.1999**
(21) Anmeldenummer: 96810039.6
(22) Anmeldetag: 17.01.1996
(51) Int. Cl.: C08G 59/56, C08L 63/00

(54) **Härtbares Epoxidharzgemisch**
Hardenable epoxy resin composition
Composition durcissable de résine d'époxyde

(30) Priorität: 26.01.1995 CH 21695
(43) Veröffentlichungstag der Anmeldung: 31.07.1996
(73) Patentinhaber: Ciba Specialty Chemicals Holding Inc., 4057 Basel (CH)
(72) Erfinder: Beisele, Christian, CH-4053 Basel (CH)

(56) Entgegenhaltungen:
- EP-A- 0 155 078
- EP-A- 0 659 833
- US-A- 3 299 169
- US-A- 3 929 717

## Beschreibung

Die vorliegende Erfindung betrifft ein härtbares Epoxidharzgemisch auf der Basis von linearen oder verzweigten Polyalkylenglykolpolyglycidylethern und Polyoxyalkylendi- oder -triaminen, welches zu in der Kälte flexiblen Formstoffen ausgehärtet werden kann, und deren Verwendung als Giessharz, insbesondere zum Umhüllen von elektrischen oder elektronischen Bauteilen.

Es ist bekannt, flexible Formstoffe auf Basis von Epoxidharzen dadurch herzustellen, indem man als Epoxidharz und Epoxidharzhärtungsmittel solche verwendet, die langkettige aliphatische Strukturlelemente enthalten. So werden beispielsweise im US-Patent 3,299,169 elastomere Epoxidharze hergestellt, indem man ein Gemisch aus einem Diglycidylether eines zweikernigen Phenols und einem Diglycidylether eines Polyoxyalkylenglykols mit einem Polyoxyalkylendiamin mit bis zu fünf wiederkehrenden Oxyalkylen-Struktureinheiten im Molekül aushärtet. Die so erhaltenen Form stoffe haben aber den Nachteil, dass sie in der Kälte noch zu wenig flexibel sind.

Desgleichen werden im US-Patent 3,929,717 härtbare Gemische auf Basis eines Diglycidylethers eines zweikernigen Phenols, eines Diglycidylethers eines Polyoxyalkylenglykols und eines Polyoxyalkylendiamins, die ausserdem noch ein primäres oder sekundäres Amin und Polyvinylpyrrolidon enthalten, offenbart. Auch diese Gemische ergeben Formstoffe, die in der Kälte noch zu wenig flexibel sind.

Es wurde nun gefunden, dass man die oben geschilderten Nachteile vermeiden kann, wenn man sowohl seitens des Epoxidharzes als auch seitens des Epoxidharzhärtungsmittels ein Gemisch von zwei verschiedenen Verbindungen einsetzt.

Gegenstand vorliegender Erfindung ist somit ein härtbares Epoxidharzgemisch, bestehend aus
a) 70 bis 85 Gew.-% eines linearen oder verzweigten Polyalkylenglykolpolyglycidylethers und 15 bis 30 Gew.-% eines von Polyalkylenglykolpolyglycidylethern verschiedenen Epoxidharzes mit mehr als einer 1,2-Epoxidgruppe im Molekül,
b) einem Epoxidharzhärtungsmittel aus 10 bis 99 Gew.-% eines Polyoxyalkylendi- oder -triamins mit mehr als 5 Oxyalkylen-Struktureinheiten im Molekül und 1 bis 90 Gew.-% eines von Polyoxyalkylenaminen verschiedenen Härtungsmittels und enthaltend gegebenenfalls
c) einen Härtungsbeschleuniger und
d) übliche Zusatzmittel für Giessharze auf Basis von Epoxidharzen, wobei die Summe der Bestandteile sowohl in der Komponente a) als auch in der Komponente b) jeweils 100 Gew.-% beträgt.

Vorzugsweise enthält das erfindungsgemässe Epoxidharzgemisch als Komponente a) einen Polyalkylenglykoldiglycidylether, insbesondere einen Polypropylenglykoldiglycidylether, und einen Diglycidylether eines zweiwertigen Phenols, inbesondere den Diglycidylether von Bisphenol A oder Bisphenol F.

Lineare und verzweigte Polyalkylenglykolpolyglycidylether sind bekannt, beispielsweise aus dem US-Patent 3,929,717 und zum Teil im Handel erhältlich. Die Herstellung des Diglycidylethers von Polypropylenglykol wird beispielsweise im Encyclopedia of Chemical Technology (Kirk-Othmer), Band 9 (1980), Seite 278, näher beschrieben.

Als von Polyalkylenglykolpolyglycidylethern verschiedene Epoxidharze mit mehr als einer 1,2-Epoxidgruppe im Molekül können die in der Epoxidharztechnik üblichen Epoxidharze verwendet werden, wie beispielsweise:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol, Propan-1,2-diol, Propan-1,3-diol, Butan-1,4-diol, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)anilin oder p,p'-Bis-(2-hydroxyethylamino)-diphenylmethan.
   Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)-methan, m-Xylylendiamin oder Bis-(4-methylaminophenyl)-methan. Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy- 1,3-bis-(5,5-dimethyl-1-glycidylhydantoin-3-yl)-propan.

Die oben genannten Epoxidverbindungen sind bekannt und zum Teil im Handel erhältlich.

Bevorzugt werden in den erfindungsgemässen Gemischen als von Polyalkylenglykolpolyglycidylethern verschiedene Epoxidharze die Diglycidyether von zweiwertigen Phenolen, insbesondere vom Bispneol A oder Bisphenol F, eingesetzt.

Die in den erfindungsgemässen Epoxidharzgemischen als Komponente b) verwendeten Polyoxyalkylendi- und -triaminen sind bekannt und zum Teil im Handel erhältlich. Als Polyoxyalkylendiamine werden vorzugsweise Verbindungen der Formel III oder IV eingesetzt 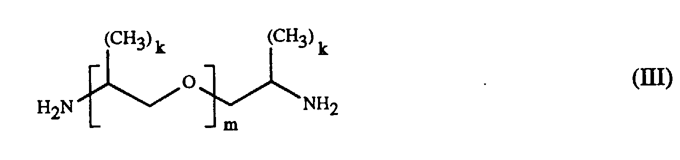 oder 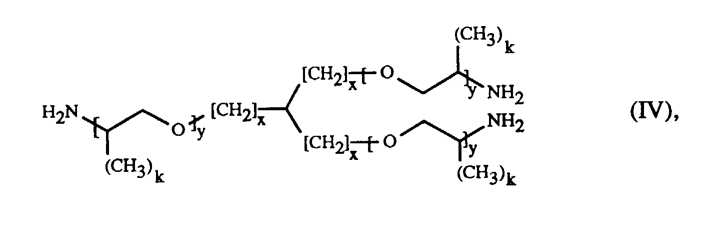 worin jedes k unabhängig voneinander null oder die Zahl 1 ist, m für eine Zahl von 6 bis 70 steht, jedes x unabhängig voneinander für null oder die Zahl 1 steht und jedes y unabhängig voneinander eine Zahl von 2 bis 50 bedeutet.

Langkettige Polyoxyalkylenketten in den genannten Polyaminen können auch verzweigt sein und somit mehr als zwei bzw. 3 Aminogruppen im Molekül aufweisen.

Bestimmte Polyoxyalkylenamine der oben angegebenen Formel sind unter der Bezeichnung Jeffanine® der Firma Texaco Chemical Co. kommerziell erhältlich.

Vorzugweise enthalten die erfindungsgemässen Epoxidharzgemische als Polyoxyalkylenamin ein Polyoxypropylendiamin oder ein Polyoxyethylendiamin, insbesondere ein Polyoxypropylendiamin der Formel V 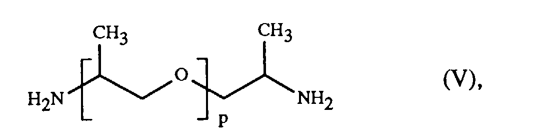 wobei p eine Zahl von 6 bis 40 ist.

Als Epoxidharzhärtungsmittel der Komponente b), das von den Polyoxyalkylenaminen verschieden ist, können im Prinzip alle üblichen Härtungsmittel für Epoxidharze eingesetzt werden, die mit den Polyoxyalkylenaminen nicht reagieren, wie beispielsweise Dicyandiamid, Polyamine sowie Polyole.

Als Polyamine können für die erfindungsgemässen härtbaren Epoxidharzgemische aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, 1,3-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harze, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren und ferner Polyamine der Formel 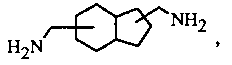 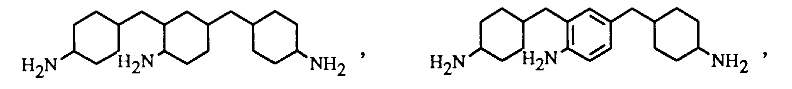 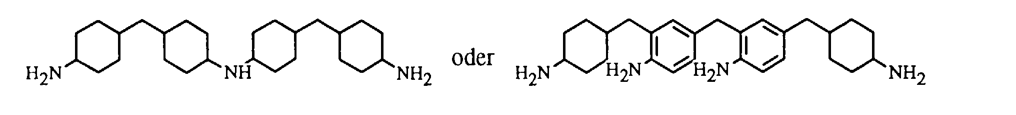 sowie Gemische dieser Aminoverbindungen.

Als Polyamine können für die erfindungsgemässen härtbaren Epqxidharzgemische auch die aminogruppenhaltigen Addukte, die bekanntlich durch Anlagerung von Aminen an Polyepoxidverbindungen oder die aminogruppenterminierten Polyamide einsetzen, die ebenfalls bekannte Verbindungen darstellen.

Als aliphatische Polyole für die erfindungsgemässen härtbaren Epoxidharzgemische eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die erfindungsgemässen härtbaren Epoxidharzgemishe beispielsweise einkernige Phenole, wie Resorcin, Hydrochinon, N,N-Bis-(2-hydroxyethyl)-anilin, oder mehrkernige Phenole, wie p,p'-Bis-(2-hydroxy-ethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol oder 4-tert.-Butylphenol oder durch Kondensation mit Bisphenolen, solche der oben genannten Art, eingesetzt werden.

Gewünschtenfalls können die erfindungsgemässen Epoxidharzgemische auch geeignete Härtungsbeschleuniger enthalten. Beispielsweise können bei Verwendung von Dicyandiamid, Polycarbonsäuren und deren Anhydriden als Beschleuniger tertiäre Amine oder deren Salze, quaternäre Ammoniumverbindungen oder Alkalimetallalkoxide verwendet werden.

Die Menge des eingesetzten Epoxidharzhärtungsmittels b) richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei der Verwendung von Polyphenolen als Härtungsmittel setzt man 0,75 bis 1,25 phenolische Hydroxylgruppen pro 1 Epoxidäquivalent ein. Katalytisch wirkende Härtungsmittel werden allgemein in Mengen von 1 bis 40 Gewichtsteilen pro 100 Gewichtsteile Epoxidharz eingesetzt.

Ausserdem können den erfindungsgemässen Epoxidharzgemischen gewünschtenfalls noch die in der Epoxidharztechnik für Giessharze üblichen Zusatzmittel zugegeben werden. Solche üblichen Zusatzmittel sind beispielsweise Füllstoffe, wie Glas- oder Metallpulver, mineralische Füllstoffe, wie Al₂O₃·nH₂O, Silikate, Calcit, Dolomit oder Quarz, Farbstoffe, Pigmente, wie Titandioxid oder Russ, Verarbeitungshilfsmittel, wie Gleitmittel, Verlaufmittel, Thixotropiermittel, Stabilisatoren, Flammhemmer, Haftvermittler zwischen Füllstoffen und Harz oder Formtrennmittel.

Beim Zusatz der üblichen Zusatzmitteln zu den erfindungsgemässen Epoxidharzgemischen richtet sich die Menge der Zusatzmitteln nach dem spezifischen Anwendungszweck der erfindungsgemässen Gemischen.

Die erfindungsgemässen Gemische werden nach an sich bekannten Methoden, wie mit Hilfe bekannter Mischaggregate, beispielsweise Rührer, Kneter oder Walzen, hergestellt.

Die Härtung der erfindungsgemässen Gemische zu Formkörpern, Beschichtungen oder dergleichen erfolgt in für die Epoxidharztechnik üblicher Weise durch Erhitzen, wie sie beispielsweise im "Handbook of Epoxy Resins", 1967, von H. Lee und K.Neville beschrieben wird. Im allgemeinen liegt die Härtungstemperatur zwischen 50 und 200°C, vorzugsweise zwischen 80 und 130°C.

Die erfindungsgemässen Gemische eignen sich beispielsweise als Laminierharze oder Beschichtungsmassen, vorzugsweise als Giessharze sowie insbesondere als Umhüllungssysteme für elektrische und elektronische Bauteile, besonders solchen, die wechselnden Temperaturen ausgesetzt sind. Wie eingangs erwähnt, zeichnen sich die aus dem erfindungsgemässen härtbaren Epoxidharzgemischen hergestellten Formstoffe und Beschichtungen durch eine gute Flexibilität über einen relativ grossen Temperaturbereich, insbesondere bei tiefen Temperaturen, aus. Durch die gute Flexibilität der erfindungsgemässen Umhüllungsmassen sowohl in der Wärme als auch in der Kälte werden bei Temperaturwechseln auf die umhüllten Bauteile weniger Stress bzw. Spannung ausgeübt.

Die aus den erfindungsgemässen Gemischen hergestellten Formstoffe weisen eine Glasumwandlungstenmperatur (T_{g}) von etwa -10°C bis etwa -80°C, vorzugsweise von -30°C bis -60°C, auf.

Gegenstand vorliegener Erfindung ist daher auch die Verwendung der erfindungsgemässen Epoxidharzgemische als Giessharze und zum Umhüllen von elektrischen und elektronischen Bauteilen.

In den folgenden Beispielen wird zum Aushärten der Epoxidharze das Härtungsmittel A der folgenden Zusammensetzung eingesetzt.

### Härtungsmittel A

In einem Rundkolben werden 296,3 g Polyoxypropylendiamin mit einem mittleren Molekulargewicht von 2000, erhältlich im Handel unter der Bezeichnung Jeffamin®D 2000 von Texaco, 592,9 g eines Polyaminoamids mit einem Aminäquivalentgewicht von 90 auf Basis dimerisierter Fettsäure und Tetraethylenpentamin, erhältlich im Handel unter der Bezeichnung Eurodur®250 von der Firma Henkel & Cie GmbH, 55,4 g Bisphenol A und 55,4 g Benzylakohol eingewogen und unter Stickstoff solange bei 120°C gerührt, bis eine braune, klare Flüssigkeit erhalten wird.

### Beispiel 1

239,97 g Diglycidylether eines Polypropylenglykols (mittleres Molekulargewicht = 400) mit einem Epoxidgehalt von 3,05 - 3,35 Äquivalenten/kg, 60 g eines flüssigen Bisphenol A-diglycidylethers mit einem Epoxidäquivalentgewicht von 185 und 0,03 g des Antischaummittels Silicone®SH 5500 der Firma Toray Silicon Co. Limited, Japan, werden zusammen 30 Minuten (min) mittels eines Mischers gemischt Anschliessend wird die erhaltenen Epoxidharzmischung bei 1 mbar entgast, und es wird eine klare Lösung mit einem Epoxidäquivalentgewicht von 310 erhalten.
100 Gewichtsteile dieser Epoxidharzmischung werden mit 45 Gewichtsteilen Härtungsmittel A gemischt und durch Erhitzen während 3 h bei 80°C unter Formgebung ausgehärtet. An den erhaltenen Formstoffen werden folgende Eigenschaften gemessen:

| | |
|---|---|
| Glasumwandlungstemperatur (T_{g})*⁾ = | -50°C |
| Dehnung gemäss ISO R 527 bei -40°C = | 240%. |

| | |
|---|---|
| *⁾gemessen mit dem Differential Scanning Calorimeter TA 4000 (Mettler) | |

### Beispiel 2

238,8 g Polypropylenglykoldiglycidylether mit einem mittleren Molekulargewicht von 400 (DY 3601), 70,9 g eines flüssigen Bisphenol A-diglycidylethers mit einem Epoxidäquivalentgewicht von 185-196, sowie 0,03 g des Antischaummittels Silicone®SH 5500 der Firma ToraySilicon Co. Limited, Japan, und 3 g Trimethoxyglycidylsilan werden in einen Knetmischer eingewogen und bei Raumtemperatur (RT) etwa 30 min lang gemischt, bis eine klare Flüssigkeit entsteht. Dann wird ein Gemisch aus 635,2 g Wollastonit und 2 g Bentone®SD-2 der Firma Kronos der Flüssigkeit zugegeben und anschliessend werden die Komponenten bei RT während 30 min gemischt. Dann werden 5 g hochdisperse Kieselsäure (Aerosil®R 202 der Firma Degussa) zugegeben und die Mischung wird dann noch 1 h unter Vakuum bei 1 mbar gemischt.
300 g der oben hergestellten Epoxidharzmischung und 48 g Härtungsmittel A werden getrennt auf 60°C erwärmt. Während des Mischens mit einem dynamischen Mischer wird die Giessharzmasse bei 1 mbar entgast. Mit dieser Giessharzmasse wird ein elektrisches Bauteil für Lampen, bestehend aus einer bestückten Leiterplatte und einem Zündtransformator in einem oben offenen Gehäuse aus einem Thermoplast, eingegossen. Das Bauteil wird ebenfalls auf 60°C vorgewärmt und dann unter Normaldruck mit der Giessharzmasse gefüllt, die während 6 h bei 60°C ausgehärtet wird. Das so eingegossene Bauteil besteht folgenden Temperaturwechseltest: 2 h/-40°C⇆2h/100°C; Testdauer: 1000 h.

### Beispiel 3

238,8 g Polypropylenglykoldiglycidylether mit einem mittleren Molekulargewicht von 400, 75,4 g eines flüssigen Bisphenol A-diglycidylethers mit einem Epoxidäquivalentgewicht von 185-196, sowie 0,03 g des Antischaummittels Silicone®SH 5500 der Firma Toray Silicon Co. Limited, Japan, und 3 g Trimethoxyglycidylsilan werden in einen Knetmischer eingewogen und bei 60°C etwa 30 min gemischt, bis eine klare Lösung entsteht. Dann werden eine Mischung aus 635,2 g Wollastonit und 2 g Bentone®SD-2 der Firma Kronos zusammen mit 0,5 g Russ der Flüssigkeit zugegeben. Diese Komponenten werden bei 60°C weitere 30 min gemischt. Anschliessend werden 5 g hochdisperse Kieselsäure (Aerosil®R 202 der Firma Degussa) hinzugegeben und noch 1 h unter Vakuum bei 1 mbar weiter gemischt.
300 g dieses Epoxidharzgemisches und 36 g des Härtungsmittels A werden getrennt auf 60°C erwärmt. Während des anschliessenden Mischens mit einem dynamischen Mischer wird die Giessharzmasse bei 1 mbar entgast. Anschliessend wird damit die untere Seite eines elektronischen Bauteils, das auf beiden Seiten mit einer Leiterplatte bestückt ist und auf 80°C vorgewärmt ist, eingegossen. Die Giessharzmasse wird während 2 h bei 80°C angeliert. Danach wird die obere Seite des elektronischen Bauteils mit einer Giessharzmasse, bestehend aus einem Gemisch aus 100 g des formulierten Epoxidharzgemisches gemäss Beispiel 1 und 45 g des Härtungsmittels A, so eingegossen, dass die Komponenten der Leiterplatte gerade zugedeckt sind. Anschliessend werden die das Bauteil umhüllenden Giessharzmassen 3 h bei 80°C gehärtet.
Das so eingegossene Bauteil besteht folgenden Funktionstest: 16 h bei -55°C und 16 h bei 110°C.

## Patentansprüche

1. Härtbares Epoxidharzgemisch, bestehend aus
a) 70 bis 85 Gew.-% eines linearen oder verzweigten Polyalkylenglykolpolyglycidylethers und 15 bis 30 Gew.-% eines von Polyalkylenglykolpolyglycidylethern verschiedenen Epoxidharzes mit mehr als einer 1,2-Epoxidgruppe im Molekül,
b) einem Epoxidharzhärtungsmittel aus 10 bis 99 Gew.-% eines Polyoxyalkylendi- oder -triamins mit mehr als 5 Oxyalkylen-Struktureinheiten im Molekül und 1 bis 90 Gew.-% eines von Polyoxyalkylenaminen verschiedenen Härtungsmittels und enthaltend gegebenenfalls
c) einen Härtungsbeschleuniger und
d) übliche Zusatzmittel für Giessharze auf Basis von Epoxidharzen, wobei die Summe der Bestandteile sowohl in der Komponenten a) als auch in der Komponente b) jeweils 100 Gew.-% beträgt.

2. Epoxidharzgemisch gemäss Anspruch 1, worin die Komponente a) aus einem Polyalkylenglykoldiglycidylether und einem Diglycidylether eines zweiwertigen Phenols besteht.

3. Epoxidharzgemisch gemäss Anspruch 2, worin die Komponente a) aus einem Polypropylenglykoldiglycidylether und einem Diglycidylether von Bisphenol A oder Bisphenol F besteht.

4. Epoxidharzgemisch gemäss Anspruch 1, worin das Polyoxyalkylenamin b) eine Verbindung der Formel III oder IV 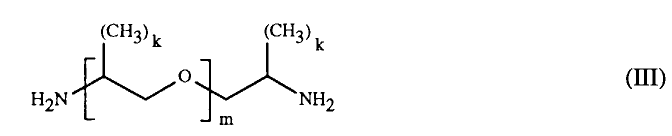 oder 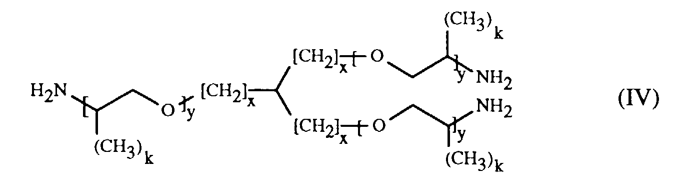 darstellt, worin jedes k unabhängig voneinander null oder die Zahl 1 ist, m für eine Zahl von 6 bis 70 steht, jedes x unabhängig voneinander für null oder die Zahl 1 steht und jedes y unabhängig voneinander eine Zahl von 2 bis 50 bedeutet.

5. Epoxidharzgemisch gemäss Anspruch 1, worin das Polyoxyalkylenamin b) eine Verbindung Polyoxypropylendiamin der Formel V 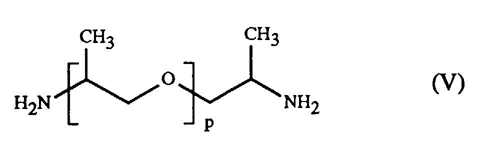 darstellt, worin p eine Zahl von 6 bis 40 ist.

6. Epoxidharzgemisch gemäss Anspruch 1, worin das vom Polyoxyalkylenamin verschiedene Härtungsmittel b) Dicyandiamid, ein anderes Polyamin oder ein Polyol ist.

7. Giessharzmasse, bestehend aus dem härtbaren Epoxidharzgemisch gemäss Anspruch 1.

8. Verwendung des Epoxidharzgemisches gemäss Anspruch 1 als Giessharzmasse zum Umhüllen von elektrischen oder elektronischen Bauteilen.

## Claims

1. A curable epoxy resin mixture consisting of
a) 70 to 85 % by weight of a linear or branched polyglycidyl ether of a polyalkylene glycol and 15 to 30 % by weight of an epoxy resin which is not a polyglycidyl ether of a polyalkylene glycol and which contains more than one 1,2-epoxy group in the molecule,
b) a hardener for expoxy resins consisting of 10 to 99 % by weight of a polyoxyalkylenedi- or triamine containing more than five oxyalkylene structural units in the molecule, and 1 to 90 % by weight of a hardener which is not a polyoxyalkyleneamine, and comprising if desired
c) a curing accelerator, and
d) customary additives for casting resins based on epoxy resins, with the proviso that the sum of the constituents both in component a) and in component b) is in each case 100 % by weight.

2. An epoxy resin mixture according to claim 1, wherein component a) consists of a diglycidyl ether of a polyalkylene glycol and a diglycidyl ether of a dihydric phenol.

3. An epoxy resin mixture according to claim 2, wherein component a) consists of a diglycidyl ether of polypropylene glycol and a diglycidyl ether of bisphenol A or bisphenol F.

4. An epoxy resin mixture according to claim 1, wherein the polyoxyalkyleneamine b) is a compound of formula III or IV. 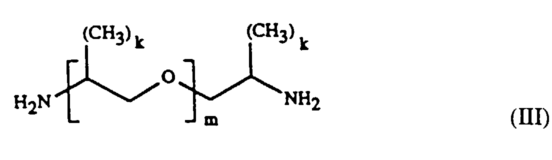 or 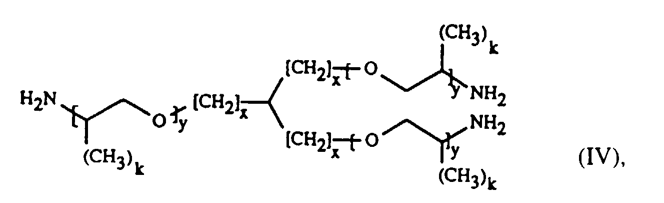 wherein the indices k are each independently of one another 0 or 1, m is a number from 6 to 70, the indices x are each independently of one another 0 or 1 and the indices y are each independently of one another a number from 2 to 50.

5. An epoxy resin mixture according to claim 1, wherein the polyoxyalkyleneamine b) is a polyoxypropylenediamine of formula V 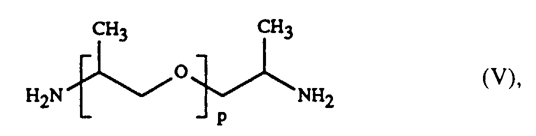 wherein p is a number from 6 to 40.

6. An epoxy resin mixture according to claim 1, wherein the hardener b) which is not a polyoxyalkyleneamine is dicyandiamide, another polyamine or a polyol.

7. A casting resin composition consisting of a curable epoxy resin mixture according to claim 1.

8. Use of an epoxy resin mixture according to claim 1 as a casting resin composition for encapsulating electrical or electronic components.

## Revendications

1. Composition durcissable de résine époxyde, constituée de
a) 70 à 85% en poids d'un polyéther glycidylique de polyalkylèneglycol linaire ou ramifié et de 15 à 30% en poids d'une résine époxyde différente des polyéthers glycidyliques de polyalkylèneglycol avec plus de 1,2 groupes époxyde dans la molécule,
b) d'un durcisseur de résine époxyde composé de 10 à 99% en poids d'une polyoxyalkylènedi- ou -triamine avec plus de 5 motifs de structure oxyalkylène dans la molécule et 1 à 90% en poids d'un durcisseur différent des polyoxyalkylèneamines et contenant éventuellement
c) un accélérateur de durcissement et
d) des additifs usuels des résines coulables à base de résines époxyde, dans laquelle la somme des constituants aussi bien dans le composant a) que dans le composant b) se monte respectivement à 100% en poids.

2. Composition de résine époxyde selon la revendication 1, dans laquelle le composant a) est constitué d'un éther diglycidylique de polyalkylèneglycol et d'un éther diglycidylique d'un phénol bifonctionnel.

3. Composition de résine époxyde selon la revendication 2, dans laquelle le composant a) est constitué d'un éther diglycidylique de polypropylèneglycol et d'un éther diglycidylique de bisphénol A ou de bisphénol F.

4. Composition de résine époxyde selon la revendication 1, dans laquelle la polyoxyalkylèneamine b) représente un composé de formule III ou IV 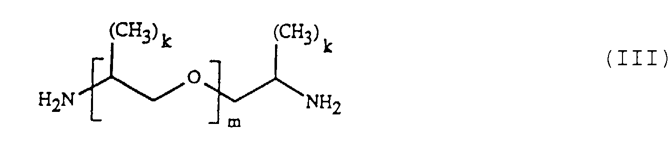 ou 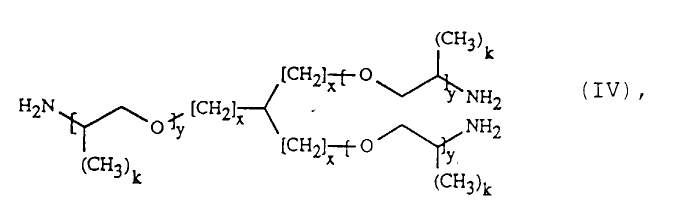 dans lesquelles chaque k représente indépendamment des autres zéro ou le chiffre 1, m représente un nombre de 6 à 70, chaque x représente indépendamment des autres zéro ou le chiffre 1 et chaque y représente indépendamment des autres un nombre de 2 à 50.

5. Composition de résine époxyde selon la revendication 1, dans laquelle la polyoxyalkylèneamine représente un composé polyoxypropylènediamine de formule V 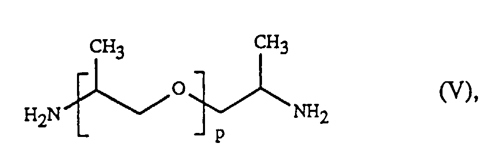 dans laquelle p est un nombre de 6 à 40.

6. Composition de résine époxyde selon la revendication 1, dans laquelle le durcisseur b) différent de la polyoxyalkylèneamine est le dicyandiamide, une autre polyamine ou un polyol.

7. Matière de résine coulable, constituée de la composition de résine époxyde durcissable selon la revendication 1.

8. Utilisation de la composition de résine époxyde durcissable selon la revendication 1 comme matière de résine coulable pour l'enrobage de composants électriques ou électroniques.
